**Europäisches Patentamt**

**European Patent Office**

**Office européen des brevets**

(19)

(11) Veröffentlichungsnummer : **0 184 083**
**B1**

(12) **EUROPÄISCHE PATENTSCHRIFT**

(45) Veröffentlichungstag der Patentschrift :
**11.10.89**

(21) Anmeldenummer : **85114833.8**

(22) Anmeldetag : **22.11.85**

(51) Int. Cl.⁴ : **C 08 F210/02**// C08F210/16
,(C08F210/02, 218:08,
210:14)

(54) **Terpolymerisate des Ethylens, Verfahren zu ihrer Herstellung und ihre Verwendung.**

(30) Priorität : **29.11.84 DE 3443475**

(43) Veröffentlichungstag der Anmeldung :
**11.06.86 Patentblatt 86/24**

(45) Bekanntmachung des Hinweises auf die Patenterteilung : **11.10.89 Patentblatt 89/41**

(84) Benannte Vertragsstaaten :
**AT BE CH DE FR GB IT LI LU NL SE**

(56) Entgegenhaltungen :
**EP--A-- 0 099 646**
**EP--A-- 0 136 698**
**FR--A-- 1 529 348**
**US--A-- 4 178 950**

(73) Patentinhaber : **HOECHST AKTIENGESELLSCHAFT**
**Postfach 80 03 20**
**D-6230 Frankfurt am Main 80 (DE)**

**AMOCO CORPORATION**
**200 East Randolph Drive**
**Chicago Illinois 60601 (US)**

(72) Erfinder : **Hobes, John, Dr, Dipl.-Chem.**
**Ernastrasse 2b**
**D-4220 Dinslaken (DE)**
Erfinder : **Payer, Wolfgang, Dr.Dipl.-Chem.**
**Zedernweg 58**
**D-4230 Wesel 1 (DE)**
Erfinder : **Kretchmer, Richard Allan**
**270 Walker Avenue**
**Clarendon Hills Illinois 60 514 (US)**

(74) Vertreter : **Reichelt, Karl-Heinz, Dr.**
**Hoechst-Aktiengesellschaft Werk Ruhrchemie Postfach 13 01 60**
**D-4200 Oberhausen 11 (DE)**

# EP 0 184 083 B1

## Beschreibung

Die vorliegende Erfindung betrifft wachsartige Ethylen/Vinylacetat/1-Hexen-Terpolymerisate, ein Verfahren zu ihrer Herstellung und ihre Verwendung als Zusatz zu Mineralölen.

Nach der GB-PS 1 263 151 stellt man Ethylen/Vinylester-Copolymerisate mit einem mittleren Molekulargewicht von 1 000 bis 2 900 aus dem Gemisch der Monomeren bei 70 bis 130 °C und 49 bis 700 bar in Gegenwart freie Radikale bildender Katalysatoren her. Dieses Verfahren wird in einem Lösungsmittel durchgeführt und ist daher sowohl wirtschaftlich als auch technisch sehr aufwendig.

Einfacher gelingt die Herstellung von Copolymerisaten des Ethylens mit Vinylestern oder Acrylsäure- bzw. Methacrylsäureestern nach einer in der DE-OS 2 102 469 beschriebenen Arbeitsweise. Die Polymerisation erfolgt bei 150 bis 350 °C und über 1 000 bar unter Ausschluß von Lösungs- und Emulgiermitteln in Gegenwart von 0,2 bis 5 Volumprozent (bezogen auf das eingesetzte Monomerengemisch) eines Polymerisationsreglers und bei einer Verweilzeit des Reaktionsgemisches im Reaktor von 30 bis 180 Sekunden. Die Polymerisate haben ein Molekulargewicht von 500 bis 4 500.

Die EP 0 099 646 A1 betrifft Ethylen/Vinylacetat/iso-Olefin-Terpolymerisate mit einem mittleren Molekulargewicht von 1 500 bis 5 500, einem Verzweigungsgrad von 6 bis 15, einem Vinylacetatgehalt von 10 bis 20 Gew.-% und einem iso-Olefingehalt von 3 bis 15 Gew.-%. Zu ihrer Herstellung arbeitet man bei einem Druck von mindestens 500 bar und Temperaturen von mindestens 150 °C in Gegenwart von 7 bis 25 Gew.-% (bezogen auf das gesamte Reaktionsgemisch) eines iso-Olefins und in Abwesenheit eines Lösungsmittels. Die Beispiele beschränken sich auf die Herstellung iso-Buten enthaltender Polymerisate.

Die in den vorstehend zitierten Druckschriften beschriebenen Co- und Terpolymerisate des Ethylens finden als Mineralölzusätze zur Verbesserung der Fließfähigkeit und Herabsetzung des Stockpunktes Anwendung (Fliessverbesserer).

Sie sind für dieses Einsatzgebiet unterschiedlich gut geeignet. Insbesondere lassen sich konzentrierte Lösungen aus den nach GB-PS 1 263 151 bzw. DE-OS 2 102 469 hergestellten Produkten nur bei erhöhten Temperaturen handhaben. Dementsprechend erfordern ihr Versand und ihr Einsatz zusätzlichen Aufwand.

Aufgabe der Erfindung ist die Bereitstellung überwiegend aus Ethylen und Vinylacetat bestehender Terpolymerisate, die die Fliesseigenschaften von Mineralöl und Mineralöldestillaten verbessern und deren konzentrierte Lösungen auch bei normaler Temperatur handhabbar sind.

Diese Aufgabe wird gelöst durch Ethylen/Vinylacetat/1-Hexen-Terpolymerisate mit einem Gehalt von 10 bis 35 Gew.-% Vinylacetat (bezogen auf das Terpolymerisat), einer Viskosität von 100 bis 5 000 mPa · s, gemessen bei 140 °C und einem Verzweigungsgrad von 2 bis 15 $CH_3$-Gruppen je 100 $CH_2$-Gruppen.

Besondere Bedeutung im Rahmen der vorliegenden Erfindung haben Ethylen/Vinylacetat/1-Hexen-Terpolymerisate mit einem Gehalt von 15 bis 28 Gew.-% Vinylacetat, (bezogen auf das Terpolymerisat) einer Viskosität von 200 bis 1 000 mPa · s, gemessen bei 140 °C und einem Verzweigungsgrad von 4 bis 10 $CH_3$-Gruppen je 100 $CH_2$-Gruppen.

Zur Herstellung der vorstehend beschriebenen Terpolymerisate polymerisiert man Monomerengemische aus 40 bis 85 Gew.-% Ethylen, 10 bis 40 Gew.-% Vinylacetat und 5 bis 30 Gew.-% 1-Hexen (jeweils bezogen auf das gesamte Monomerengemisch) bei 110 bis 300 °C und oberhalb 500 bar in Gegenwart Radikale bildender Initiatoren und in Abwesenheit von Lösungs- oder Suspensionsmitteln.

Die erfindungsgemäßen Terpolymerisate sind als Fliessverbesserer im allgemeinen mindestens ebenso wirksam wie Ethylen-Vinylacetat-Copolymere, sie übertreffen diese aber deutlich hinsichtlich der Handhabbarkeit in konzentrierten Lösungen.

Dieser Befund ist überraschend, weil Terpolymerisate aus Ethylen, Vinylacetat und Propen oder Ethylen, Vinylacetat und Buten die Wirksamkeit von Ethylen-Vinylacetat-Copolymeren nicht erreichen. Es war nicht zu erwarten, daß die Verwendung eines höheren homologen α-Olefins das Eigenschaftsbild der Produkte wesentlich ändern würde. Das erfindungsgemässe Verfahren hat den Vorteil, daß unter Ausschluß eines Lösungsmittels polymerisiert werden kann.

Das als Ausgangsstoff verwendete Ethylen wird in der für Polymerisationsreaktionen üblichen Reinheit von mindestens 99,9 % eingesetzt. Die gleiche Reinheit wird auch von den beiden anderen Comonomeren, Vinylacetat und 1-Hexen gefordert.

Die Copolymerisation des Ethylens mit den genannten Comonomeren erfolgt bei Drücken oberhalb 500 bar, vorzugsweise bei 500 bis 3 000 bar und insbesondere bei 1 000 bis 2 000 bar. Die Polymerisationstemperaturen betragen 110 bis 300 °C, vorzugsweise 130 bis 280 °C.

Unter dem Begriff Radikale bildende Initiatoren werden die bei der Hochdruckpolymerisation von Ethylen üblicherweise eingesetzten Katalysatoren verstanden wie Sauerstoff, Peroxide, z. B. tert.-Butylperbenzoat, Dilaurylperoxid, Ditert.-butylperoxid, Hydroperoxide, Azoverbindungen, z. B. Azobuttersäuredinitril. Die Initiatoren werden einzeln aber auch als Gemisch z. B. aus zwei oder mehreren Peroxiden oder Peroxid und Sauerstoff eingesetzt. Man verwendet sie in Mengen von 5 bis 10 000 Gew.-ppm, bezogen auf Ethylen.

Ein besonderes Merkmal des erfindungsgemässen Verfahrens ist, daß die Polymerisation in praktischer Abwesenheit eines Lösungs- oder Suspensionsmittels durchgeführt wird. Lediglich untergeordnete Mengen einer inerten Flüssigkeit können zusammen mit dem Initiator in das Reaktionsgemisch

2

eingebracht werden, denn Peroxide, Hydroperoxide und Azoverbindungen werden gelöst, z. B. in Benzin, Cyclohexan oder Isooctan, dem Reaktor zugeführt.

Die nach dem erfindungsgemäßen Verfahren hergestellten neuen Terpolymerisate haben eine Viskosität von 100 bis 5 000 mPa·s, gemessen bei 140 °C. Sie wird mit dem Rotovisco System MV II (Hersteller Fa. Haake, Karlsruhe) gemessen.

Die Viskosität erlaubt Rückschlüsse auf das Molekulargewicht der Terpolymerisate.

Die Einstellung der gewünschten Viskosität erfolgt mit Hilfe von Moderatoren, wie gesättigten Kohlenwasserstoffen, z. B. Propan, Aldehyden, z. B. Propionaldehyd, Butyraldehyd oder Isobutyraldehyd, Ketonen, z. B. Methylethylketon, Methylisobutylketon, Aceton, Cyclohexanon oder Alkoholen, z. B. Butanol.

Bevorzugter Moderator ist das auch als Comonomeres verwendete 1-Hexen.

In Abhängigkeit von der Viskosität werden die Moderatoren in Konzentrationen von 2 bis 25 Vol.-% bezogen auf Ethylen angewandt.

Die Durchführung des erfindungsgemässen Verfahrens erfolgt in den für die Polymerisation von Ethylen unter hohem Druck üblichen Vorrichtungen, insbesondere in Röhrenreaktoren oder in Autoklaven. Die Umsetzung kann kontinuierlich oder diskontinuierlich vorgenommen werden. Besonders bewährt hat sich die kontinuierliche Polymerisation in Rohrreaktoren. Die Monomeren werden dem Reaktor an einer oder an mehreren Stellen zugeführt. Der Initiator wird entweder mit dem Monomerengemisch in die Reaktionszone eingebracht oder an längs des Reaktors vorgesehenen Stellen dem Reaktionsgemisch zudosiert.

Die erfindungsgemäßen Terpolymerisate werden bevorzugt als Zusatz zu Mineralöl und Mineralölfraktionen verwendet. Mitteldestillate sind bei tiefen Temperaturen häufig nicht genügend fließfähig und können daher nicht mehr gepumpt werden. Ursache dieses Verhaltens sind kristallisierbare Paraffine, die in Mineralölen und ihren Destillaten enthalten sind. Sie fallen beim sogenannten Trübungspunkt aus und agglomerieren allmählich zu Kristallanhäufungen. Bei Erreichen des Stockpunktes (bestimmt nach DIN 57 583) büßt das Öl seine Fließfähigkeit schließlich fast vollständig ein. Für viele Anwendungszwecke müssen Mineralölfraktionen überdies auch bei tiefen Temperaturen gut filtrierbar sein. Die Filtrierbarkeit der Destillate, insbesondere Dieselöl und Heizöl EL, wird durch Bestimmung des CFPP-Wertes (Kalt-Filter-Verstopfungspunkt) gemessen. Die Durchführung des Test ist in I. of the Inst. of Petr. Bd 52, Juni 1966 S.173-185 sowie in DIN 51 428 beschrieben.

Es ist bekannt, neben anderen polymeren Verbindungen, Terpolymerisate die aus Ethylen Vinylacetat sowie einem weiteren α-Olefin bestehen zur Verbesserung der Fließeigenschaften von Mineralöl und Mineralöldestillaten einzusetzen. Ihre Wirkung beruht darauf, daß sie das Wachstum der in der Kälte anfallenden Paraffinkristalle verhindern. Überraschenderweise hat sich gezeigt, daß die Eignung der Terpolymerisate die Fließfähigkeit zu steigern, sehr stark von der Art des α-Olefins abhängt, und als besonders wirksam erwiesen sich die erfindungsgemäß zusammengesetzten und hergestellten Terpolymerisate.

Im allgemeinen setzt man die Terpolymerisate dem Mineralöl bzw. den Mineralölfraktionen in Form von 40-50 Gew.-%igen Lösungen in einem aromatischen Kohlenwasserstoff zu. Die Terpolymerisatmenge bezogen auf das Mineralöl soll 0,001 bis 2, vorzugsweise 0,005 bis 0,5 Gew.-% betragen. Die Terpolymerisate können allein oder auch zusammen mit anderen Additiven verwendet werden, beispielsweise mit anderen Stockpunkterniedrigern oder Entwachsungshilfsmitteln, Korrosionsinhibitoren, Antioxidantien oder Schlamminhibitoren.

Die Erfindung wird in den nachfolgenden Beispielen näher beschrieben. Die Beispiele 1 bis 13 betreffen die erfindungsgemässen Terpolymerisate und ihrer Herstellung. Polymerisationsbedingungen und Eigenschaften der Verfahrensprodukte sind in den Tabellen 1 und 2 zusammengestellt. Zum Vergleich sind in den Versuchen 14 bis 16 Durchführung und Ergebnis von Polymerisationen nach dem Stand der Technik (Beispiel 15, 16) sowie mit Propen (statt 1-Hexen, wie nach der Erfindung) als Comonomerem (Beispiel 14) angegeben.

Tabelle 3 gibt einen Überblick über die Wirksamkeit der erfindungsgemäßen und der in Vergleichsversuchen hergestellten Terpolymerisate als Fliessverbesserer.

Der Vinylacetatgehalt in den Polymeren wird nach der Pyrolysemethode bestimmt. Hierzu werden 200 mg des Polymeren mit 300 mg reinem Polyethylen in einem Pyrolysekolben 5 Minuten auf 450 °C erhitzt und die Spaltgase in einem 250 ml-Rundkolben aufgefangen. Die gebildete Essigsäure wird mit einer $NaJ/KJO_3$-Lösung umgesetzt und mit $Na_2S_2O_3$-Lösung das freiwerdende Jod titriert.

Die Bestimmung des Verzweigungsgrades der Polymeren erfolgt durch H-NMR-Spektroskopie. Unter Verzweigungsgrad versteht man die Anzahl $CH_3$-Gruppen je 100 $CH_2$-Gruppen mit Ausnahme der $CH_3$-Gruppen, die aus dem Acetatrest stammen.

Die Bestimmung des Pour Points der Lösungen des Polymeren in Kerosin erfolgt nach DIN ISO 3016.

Beispiele 1-9

Ethylen, Vinylacetat und Hexen werden kontinuierlich in einem Autoklaven polymerisiert. Hierzu wird das Monomerengemisch beim Reaktionsdruck in den Autoklaven eingespeist, nachdem die für die Aufrechterhaltung der Polymerisation erforderliche Menge Peroxid als Lösung in einer Benzinfraktion zugesetzt worden ist. Die Verweilzeit beträgt etwa 80 sec.

Die jeweiligen Polymerisationsbedingungen und die Kennzeichzeichnung der erhaltenen Polymeren sind in Tabelle 1 zusammengestellt. In den Beispielen 1, 2, 4 und 5 wurde Bis-ethylhexylperoxidicarbonat als Initiator, in den Beispielen 3, 6, 7 und 8 t-Butyl-peroxi-trimethylhexanoat eingesetzt.

Tabelle 1

Herstellung von Ethylen-Vinylacetat-1-Hexen-Terpolymeren

| Beispiel - Nr. | 1 | 2 | 3 | 4 | 5 | 6 | 7 | 8 | 9 |
|---|---|---|---|---|---|---|---|---|---|
| Reaktionsbedingungen | | | | | | | | | |
| Druck (bar) | 1 500 | 1 500 | 1 500 | 2 000 | 2 000 | 2 000 | 1 500 | 1 000 | 500 |
| Temperatur (°C) | 200 | 200 | 230 | 200 | 200 | 230 | 230 | 230 | 230 |
| Zusammensetzung des Reaktionsgemisches | | | | | | | | | |
| Ethylen (Gew.-%) | 56,1 | 48,3 | 57,3 | 52,7 | 55,4 | 59,2 | 56,9 | 57,4 | 64,3 |
| 1-Hexen (Gew.-%) | 19,1 | 19,7 | 20,0 | 17,9 | 18,8 | 20,2 | 14,3 | 12,4 | 7,6 |
| Vinylacetat (Gew.-%) | 24,8 | 32,0 | 22,7 | 29,4 | 25,8 | 20,6 | 28,8 | 30,2 | 28,1 |
| Initiatoreinsatz (Gew.-ppm) | 6 300 | 8 000 | 650 | 2 800 | 2 800 | 260 | 280 | 1 080 | 1 430 |
| Kennzeichnung des Polymeren | | | | | | | | | |
| Vinylacetatgehalt (Gew.-%) | 23,7 | 31,2 | 23,0 | 27,4 | 25,3 | 19,6 | 27,0 | 28,4 | 27,1 |
| Viskosität (mPa·s) | 195 | 150 | 210 | 460 | 435 | 295 | 320 | 295 | 270 |
| Verzweigung CH$_3$/100 CH$_2$ | 8,3 | 9,3 | 8,0 | 6,3 | 6,7 | 6,8 | - | - | - |
| Pour Point (50 Gew.-%ige Lösung in Kerosin - °C) | + 3 | - 21 | + 3 | 0 | + 3 | + 12 | - | - | - |

Beispiele 10-12

Abweichend von der Arbeitsweise der Beispiele 1-9 wird zusätzlich Propionaldehyd als Molekulargewichtsregler verwendet. Die Daten der Polymerisationsversuche und der erhaltenen Polymerisate sind in Tabelle 2 zusammengefaßt. Als Initiator wird t-Butyl-peroxi-trimethylhexanoat eingesetzt. Die Verweilzeit beträgt etwa 80 sec.

Tabelle 2

Herstellung von Ethylen-Vinylacetat-1-Hexen-Terpolymeren in Gegenwart von Propionaldehyd

| Beispiel - Nr. | 10 | 11 | 12 |
|---|---|---|---|
| **Reaktionsbedingungen** | | | |
| Druck (bar) | 1 500 | 1 000 | 500 |
| Temperatur ($^{\circ}$C) | 230 | 230 | 230 |
| **Zusammensetzung des Reaktionsgemisches** | | | |
| Ethylen (Gew.-%) | 61,8 | 62,9 | 66,8 |
| 1-Hexen (Gew.-%) | 7,8 | 7,4 | 3,6 |
| Vinylacetat (Gew.-%) | 29,2 | 28,9 | 29,2 |
| Propionaldehyd (Gew.-%) | 1,2 | 0,8 | 0,4 |
| **Kennzeichnung des Polymeren** | | | |
| Vinylacetatgehalt (Gew.-%) | 27,4 | 26,9 | 27,7 |
| Viskosität $V_{140}$ (mPa·s) | 300 | 310 | 270 |
| Verzweigung $CH_3/100\ CH_2$ | 6,4 | 6,7 | - |

## Beispiel 13

In einem Rohrreaktor wie er für die Polymerisation von Ethylen üblich ist, wird bei 1 500 bar kontinuierlich ein Gemisch aus 55,9 Gew.-% Ethylen, 19,3 Gew.-% 1-Hexen und 24,8 Gew.-% Vinylacetat eingeführt und 800 Gew.-ppm t-Butyl-peroxi-ethylhexanoat bezogen auf das gesamte Gemisch zudosiert. Nach Einsetzen der Reaktion steigt die Temperatur bis auf 231 °C an.

Das Reaktionsgemisch wird in zwei Stufen auf 0,5 bar entspannt, die nicht umgesetzten Teile werden zurückgeführt. Ethylen, 1-Hexen und Vinylacetat werden in dem Maße ergänzt, daß die oben wiedergegebene Zusammensetzung des Ausgangsgemisches aufrechterhalten bleibt.

Man erhält ein Terpolymer mit einem Vinylacetatgehalt von 23,5 Gew.-%, einer Viskosität bei 140 °C von 210 mPa · s und einem Verzweigungsgrad von 7,9 $CH_3$-Gruppen je 100 $CH_2$.

## Beispiel 14 (Vergleich)

In einem Autoklaven wird bei 1 000 bar kontinuierlich ein Gemisch aus 57,6 Gew.-% Ethylen, 29,7 Gew.-% Vinylacetat und 12,7 Gew.-% Propen eindosiert und 1 300 Gew.-ppm (bezogen auf das Reaktionsgemisch) t-Butyl-peroxi-trimethylhexanoat zugesetzt. Die Polymerisation läuft bei 230 °C ab. Es wird ein Polymer mit einem Vinylacetatgehalt von 26,9 Gew.-% und einer Viskosität von 240 mPa · s bei 140 °C erhalten. Die 50 %ige Lösung in Kerosin hat einen Pour Point von —24 °C.

## Beispiel 15 (Vergleich)

In einem Autoklaven wird bei 1 500 bar kontinuierlich ein Gemisch aus 58,2 Gew.-% Ethylen, 28,8 Gew.-% Vinylacetat und 13,0 Gew.-% Buten-1 eindosiert und 1 100 Gew.-ppm (bezogen auf das Reaktionsgemisch) t-Butyl-peroxi-trimethylhexanoat zugesetzt. Die Polymerisation läuft bei 230 °C ab. Es wird ein Polymer mit einem Vinylacetatgehalt von 27,6 Gew.-% und einer Viskosität von 280 mPa · s bei 140 °C erhalten. Die 50 %ige Lösung in Kerosin hat einen Pour Point von —3 °C.

Beispiel 16 (Vergleich)

In einem Autoklaven wird bei 2 000 bar kontinuierlich ein Gemisch aus 61,9 Gew.-% Ethylen, 15,1 Gew.-% Vinylacetat und 23,0 Gew.-% Diisobutylen eindosiert und 230 Gew.-ppm (bezogen auf das Reaktionsgemisch) t-Butyl-peroxi-trimethylhexanoat zugesetzt. Die Polymerisation läuft bei 230 °C ab. Es wird ein Polymer mit einem Vinylacetatgehalt von 18,3 Gew.-%, einer Viskosität von 275 mPa · s bei 140 °C und einem Verzweigungsgrad von 11,8 $CH_3$-Gruppen je 100 $CH_2$-Gruppen erhalten. Die 50 %ige Lösung in Kerosin hat einen Pour Point von + 24 °C.

Bestimmung der Wirksamkeit der Terpolymeren im CFPP-Test

Die Terpolymerisate der Beispiele 1 bis 13 und der Vergleichsbeispiele 14 bis 16 werden entsprechend DIN 51428 (Kalt-Filter-Verstopfungspunkt-Test, CFPPT) in verschiedenen Mitteldestillaten auf ihre Wirksamkeit hin untersucht.

Die eingesetzten Mitteldestillate sind durch folgende Siedeanlyse gekennzeichnet :

| | | M1 | M2 | M3 |
|---|---|---|---|---|
| Siedeanfang | (°C) | 180 | 209 | 182 |
| 5 % | (°C) | 202 | 281 | 213 |
| 50 % | (°C) | 297 | 289 | 281 |
| 90 % | (°C) | 357 | 356 | 349 |
| Siedeende | (°C) | 357 | 368 | 370 |

Es werden die in Tabelle 3 aufgeführten Ergebnisse erhalten.

(Siehe Tabelle 3 Seite 7 f.)

Tabelle 3

CFPP-Testergebnisse

| Nr. | Mitteldestillat | Polymerkonzentration (ppm) | CFPP-Wert (°C) |
|---|---|---|---|
| | M1 | 0 | +1 |
| | M2 | 0 | -1 |
| | M3 | 0 | -6 |
| 1 | M1 | 200 | -13 |
| 1 | M2 | 200 | -10 |
| 1 | M3 | 50 | -11 |
| 2 | M1 | 200 | -1 |
| 2 | M2 | 200 | -5 |
| 3 | M1 | 200 | -10 |
| 3 | M2 | 200 | -8 |
| 4 | M1 | 200 | -14 |
| 4 | M2 | 200 | -9 |
| 4 | M3 | 50 | -11 |
| 5 | M1 | 200 | -12 |
| 5 | M2 | 200 | -9 |
| 5 | M3 | 50 | -12 |
| 6 | M1 | 200 | -10 |
| 6 | M2 | 200 | -9 |
| 6 | M3 | 50 | -10 |
| 7 | M1 | 200 | -11 |
| 7 | M2 | 200 | -9 |
| 8 | M1 | 200 | -2 |
| 9 | M1 | 200 | -1 |
| 10 | M1 | 50 | -3 |
| 10 | M1 | 200 | -13 |
| 10 | M2 | 200 | -5 |
| 11 | M1 | 50 | -1 |
| 11 | M1 | 100 | -8 |
| 11 | M1 | 200 | -12 |
| 11 | M2 | 50 | -4 |
| 11 | M2 | 100 | -5 |
| 12 | M1 | 50 | +1 |
| 12 | M1 | 200 | -4 |
| 13 | M1 | 200 | -12 |
| 13 | M2 | 200 | -11 |
| 13 | M3 | 50 | -12 |
| 14 | M1 | 50 | +1 |
| 14 | M1 | 200 | +3 |
| 14 | M2 | 200 | +1 |
| 15 | M1 | 50 | -1 |
| 15 | M1 | 200 | -10 |
| 15 | M2 | 200 | -6 |
| 16 | M1 | 50 | -4 |
| 16 | M1 | 200 | -10 |
| 16 | M3 | 50 | -10 |

## Patentansprüche

1. Ethylen/Vinylacetat/1-Hexen-Terpolymerisate mit einem Gehalt von 10 bis 35 Gew.-% Vinylacetat, (bezogen auf das Terpolymerisat) einer Viskosität von 100 bis 5 000 mPa · s, gemessen bei 140 °C und einem Verzweigungsgrad von 2 bis 15 $CH_3$-Gruppen je 100 $CH_2$-Gruppen.

2. Verfahren zur Herstellung der Terpolymerisate nach Anspruch 1 dadurch gekennzeichnet, daß man Monomerengemische aus 40 bis 85 Gew.-% Ethylen, 10 bis 40 Gew.-% Vinylacetat und 5 bis 30 Gew.-

% 1-Hexen (jeweils bezogen auf das gesamte Monomerengemisch) bei 110 bis 300 °C und oberhalb 500 bar in Gegenwart Radikale bildender Initiatoren und in Abwesenheit von Lösungs- oder Suspensionsmitteln polymerisiert.

3. Verfahren nach Anspruch 2 dadurch gekennzeichnet, daß die Polymerisation bei Drücken von 1 000 bis 2 000 bar und bei Temperaturen von 130 bis 280 °C durchgeführt wird.

4. Verwendung der Polymerisate nach Anspruch 1 als Zusatz zu Mineralöl oder Mineralöldestillaten.

5. Mineralöldestillate mit einem Zusatz von 0,001 bis 2 Gew.-% (bezogen auf das Mineralöl) der Polymerisate nach Anspruch 1.

## Claims

1. Ethylene/vinyl acetate/1-hexene tertiary polymers with a content of 10 to 35 % by weight of vinyl acetate (related to the tertiary polymer), a viscosity of 100 to 5,000 mPaxsec, measured at 140 °C and a degree of branching or 2 to 15 $CH_3$ groups per 100 $CH_2$ groups.

2. A process for preparing tertiary polymers according to claim 1, characterised in that monomer mixtures consisting or 40 to 85 % by weight of ethylene, 10 to 40 % by weight of vinyl acetate and 5 to 30 % by weight or 1-hexene (in each case related to the total monomer mixture) are polymerised at 110 to 300 °C and above 500 bar in the presence or radical-forming initiators and in the absence or solvents or suspending media.

3. A process according to claim 2, characterised in that polymerisation is performed at pressures of 1,000 to 2,000 bar and at temperatures of 130 to 280 °C.

4. The use of polymers according to claim 1 as additives to mineral oil or mineral oil distillates.

5. Mineral oil distillates where 0.001 to 2 % by weight of polymer (related to the mineral oil) according to claim 1 has been added.

## Revendications

1. Terpolymères éthylène-acétate de vinyle-1-hexène d'une teneur en acétate de vinyle de 10 à 35 % en poids (par rapport au terpolymère), d'une viscosité de 100 à 5 000 mPa · s mesurée à 140 °C et d'un degré de ramification de 2 à 15 groupes $CH_3$ par 100 groupes $CH_2$.

2. Procédé pour la fabrication de terpolymères selon la revendication 1, caractérisé en ce que l'on polymérise des mélanges de monomère de 40 à 85 % en poids d'éthylène, 10 à 40 % en poids d'acétate de vinyle et 5 à 30 % en poids de 1-hexène (rapportés chaque fois au mélange total de monomères) à 110-300°C et sous plus de 500 bar en présence d'inducteurs générateurs de radicaux et en l'absence de solvants ou d'agents de suspension.

3. Procédé selon la revendication 2, caractérisé en ce que la polymérisation est mise en œuvre sous des pressions de 1 000 à 2 000 bar et à des températures de 130 à 280°C.

4. Utilisation des polymères selon la revendication 1 comme additif à l'huile minérale ou aux distillats d'huile minérale.

5. Distillats d'huile minérale contenant une addition de 0,001 à 2 % en poids (par rapport à l'huile minérale) des polymères selon la revendication 1.